# EUROPÄISCHE PATENTSCHRIFT

(11) **EP 2 481 514 B1**
(45) Veröffentlichungstag und Bekanntmachung des Hinweises auf die Patenterteilung: **22.02.2017**
(21) Anmeldenummer: 11002930.3
(22) Anmeldetag: 07.04.2011
(51) Int. Cl.: B23K 9/167, B23K 9/173, B23K 9/23, B23K 35/38

(54) **WIG- oder MSGSchweißverfahren für austenitischen Stahl Fe-36Ni mit einem stickstoffhaltigen Schweißgas.**
Method of TIG or GMAW welding of austenitic steel Fe-36 Ni with a gas containing nitrogen
Procédé de soudage TIG ou MIG/MAG d'acier austénitique Fe-36Ni avec un gaz contenant de l'azote

(30) Priorität: 31.01.2011 DE 102011009827
(43) Veröffentlichungstag der Anmeldung: 01.08.2012
(73) Patentinhaber: Linde AG, 80331 München (DE)
(72) Erfinder: Ammann, Thomas, 81379 München (DE)

(56) Entgegenhaltungen:
- GB-A- 2 037 639
- JP-A- 10 180 486
- JP-A- 60 221 194
- US-A- 3 143 631
- US-A- 3 770 932
- US-A- 3 902 039
- US-A- 6 111 219
- US-A1- 2008 277 398

## Beschreibung

Die Erfindung betrifft ein WIG- oder MSG-Schweißverfahren für austenitischen Stahl gemäß dem Oberbegriff des Anspruchs 1 (siehe, z.B., US2008/277398 A1), der weder Ti noch Al als Legierungselement in einer jeweiligen Menge von mehr als etwa 0,2 Gew.-% enthält.

Austenitische Stähle mit relativ geringem Nickelgehalt, z.B. sogenannte 9%-Ni-Stähle, und die austenitische Fe/Ni36(oder Fe36Ni)-Legierung (Eisen mit 36% Nickel, auch als "Invar^{®}"-Stahl bekannt) werden in Rohrleitungen für den Transport von flüssigen Gasen eingesetzt, da sie kaltzäh sind. Der letztgenannte Stahl besitzt zudem den Vorteil, dass er sich bei Erwärmung oder Abkühlung nicht nennenswert ausdehnt bzw. zusammenzieht, so dass auch bei längeren Leitungen auf Kompensationsbögen verzichtet werden kann. Die Zusammensetzung der genannte Stähle ist wie folgt (Quelle: ThyssenKrupp)

Fe/Ni36 (in Gew.-%), gemäß der Erfindung :
Ni: 35,0-37,0
Cr: 0,25
C: 0,15
Mn: 0,60
Si: 0,40
Co: 0,50
P: 0,025
S: 0,025
Fe: Rest
9%-Ni-Stahl, nicht im Schutzumfang der Erfindung :
Ni: 8,5-10,0
C: < 0,10
Mn: 0,30-0,80
Fe: Rest

Diese Werkstoffe haben allerdings die nachteilige Eigenschaft, dass sie beim Schweißen ein extrem grobkörniges Schweißgut bilden, wodurch die mechanischen Eigenschaften sehr verschlechtert werden. Im Fall von Fe/Ni36 wurde versucht, dieses Problem durch speziell modifizierte Schweißzusätze zu beheben, denen z. B. etwa 2% Cr und 1% Al hinzulegiert wurden. Das verbesserte zwar die mechanischen Eigenschaften, verschlechterte aber das Ausdehnungsverhalten des Schweißgutes.

Es wurde nun überraschend gefunden, dass Fe/Ni36-Stahl ausgezeichnete Schweißnähte bilden, wenn dem Schweißzusatz die Elemente Ti und/oder Al zulegiert werden und das Schweißgas gleichzeitig Stickstoff enthält.

Demgemäß betrifft die Erfindung ein WIG- oder MSG-Schweißverfahren für Fe/Ni36 Stahl, der weder Ti noch Al als Legierungselement in einer jeweiligen Menge von mehr als etwa 0,2 Gew.-% enthält, dadurch gekennzeichnet, dass bei dem Verfahren ein Schweißzusatz, der Ti und/oder Al in einer jeweiligen Menge von etwa 0,1% bis etwa 5%, bevorzugt etwa 0,5% bis etwa 3%, noch bevorzugter etwa 1 bis etwa 2% enthält, zusammen mit einem stickstoffhaltigen Schweißgas eingesetzt wird, wobei der Stickstoff in dem Schweißgas in einer Menge von etwa 1% bis etwa 15%, bevorzugt etwa 3% bis etwa 10% und insbesondere etwa 5% bis etwa 8% vorliegt, und wobei dem ansonsten artgleichen Schweißzusatz außer Ti und/oder Al kein weiteres Element in signifikanter Menge hinzulegiert ist, das in dem austenitischen Stahl nicht vorhanden ist.

Bevorzugt wird nur eines dieser beiden Elemente hinzulegiert. Ti ist besonders bevorzugt.

Bevorzugt werden den Schweißzusätzen keine weiteren, in dem austenitischen Stahl-Schweißgut nicht enthaltenen Elemente hinzulegiert, z.B. wird bei Fe/Ni36-Stahl dem Schweißzusatz bevorzugt kein Cr hinzulegiert, da es in Fe/Ni36-Stahl nicht in signifikanter Menge enthalten ist. Das Hinzulegieren von beispielsweise Cr zum Schweißgut selbst ist eher als "Notlösung" zu sehen, da wegen der Tendenz zur Grobkornbildung die mechanischen Gütewerte anders nicht zu erreichen sind.

In herkömmlichen Schweißverfahren ist die Zusammensetzung des Schweißzusatzes jener des Schweißgutes meist sehr ähnlich.

Demgemäß ist ein Teilaspekt einer Ausführungsform der vorliegenden Erfindung (neben der Verwendung eines stickstoffhaltigen Schweißgases) die Hinzulegierung von Ti und/oder Al als einzigem Element bzw. einzigen Elementen, das/die nicht in der Stahllegierung selbst enthalten ist/sind, in allen Schweißzusätzen für Stahllegierungen, die selbst weder Ti noch Al in signifikanten Mengen enthalten.

So umfasst ein Schweißzusatz für Fe/Ni36-Stahl bevorzugt 36%Ni, Rest Fe, und als einzige(s) weitere(s) Elemente Ti und/oder Al.

Die Schweißzusätze werden beim MSG-Schweißen als Schweißdraht zugegeben. Beim WIG-Schweißen werden sie als Schweißdraht oder -stab zugegeben.

Der Stickstoffgehalt des Schweißgases beträgt gemäß der Erfindung etwa 1 % bis etwa 15 %, bevorzugt etwa 3% bis etwa 10% und insbesondere etwa 5% bis etwa 8%.

Die restlichen Gase sind aus den für das WIG- oder MIG-Schweißen üblichen Schweißgasen ausgewählt, z.B. Argon, Helium, CO₂, O₂ und H₂. Ein bevorzugtes Schweißgas ist z.B. CRONIGON Ni30 (Ar + 5%He + 5%N₂ + 550ppm CO₂), welches die oben genannten Mengen an Stickstoff enthält.

Bei dem zu bearbeitenden Schweißgut handelt es sich um Fe/Ni36-Stahl, der keine signifikanten, wie oben definierten Mengen an Ti und/oder Al enthält.

Es wurde überraschend gefunden, dass die Anwesenheit von Ti und/oder Al lediglich im Schweißzusatz ausreichend ist, um im Zusammenwirken mit dem stickstoffhaltigen Schweißgas eine signifikante Verfeinerung des Korns der Schweißnaht zu erhalten, welche sich vorteilhaft auf die Güte der Schweißnaht auswirkt. Im Fall von Fe/Ni36-Stahl bedeutet dies, dass neben einem guten mechanischen Gütewert unerwartet auch eine sehr gute Ausdehnungseigenschaft der Schweißnaht erzielt werden kann, was bei den bisher bekannten Schweißverfahren nicht der Fall ist.

## Patentansprüche

1. WIG- oder MSG-Schweißverfahren für austenitischen Stahl, der aus Fe/Ni36-Stahl ausgewählt ist und der weder Ti noch Al in einer jeweiligen Menge von mehr als etwa 0,2 Gew.-% enthält, **dadurch gekennzeichnet, dass** bei dem Verfahren ein Schweißzusatz, der Ti und/oder Al in einer jeweiligen Menge von etwa 0,1% bis etwa 5%, bevorzugt etwa 0,5% bis etwa 3%, noch bevorzugter etwa 1 bis etwa 2% enthält, zusammen mit einem stickstoffhaltigen Schweißgas eingesetzt wird, wobei der Stickstoff in dem Schweißgas in einer Menge von etwa 1% bis etwa 15%, bevorzugt etwa 3% bis etwa 10% und insbesondere etwa 5% bis etwa 8% vorliegt, und wobei dem ansonsten artgleichen Schweißzusatz außer Ti und/oder Al kein weiteres Element in signifikanter Menge hinzulegiert ist, das in dem austenitischen Stahl nicht vorhanden ist.

2. WIG- oder MSG-Schweißverfahren nach Anspruch 1, **dadurch gekennzeichnet, dass** der Rest des Schweißgases Argon, Helium, CO2, 02 und/oder H2 umfasst.

## Claims

1. TIG or MIG welding method for austenitic steel, which is selected from Fe/Ni36 steel and contains neither Ti nor Al in a respective quantity of more than roughly 0.2% by weight, **characterised by** that in the method, a weld filler, which contains Ti and/or Al in a respective quantity of roughly 0.1 % to roughly 5%, preferably roughly 0.5% to roughly 3%, even more preferably roughly 1 to roughly 2%, is used together with a nitrogenous welding gas, wherein the nitrogen is present in the welding gas in a quantity of roughly 1% to roughly 15%, preferably roughly 3% to roughly 10% and in particular roughly 5% to roughly 8%, and wherein apart from Ti and/or Al, no other element that is not present in the austenitic steel is added to the otherwise compatible weld filler in a significant quantity.

2. TIG or MIG welding method according to claim 1, **characterised by** that the rest of the welding gas comprises argon, helium, CO2, 02 and/or H2.

## Revendications

1. Procédé de soudage TIG ou MIG/MAG appliqué à de l'acier austénitique choisi parmi l'acier Fe-Ni36 et ne contenant ni Ti ni Al dans une quantité respective supérieure à environ 0,2 % en poids, **caractérisé en ce que** le procédé fait appel à un additif de soudage contenant du Ti et/ou de l'Al dans une quantité respective d'environ 0,1 % à environ 5 %, de préférence d'environ 0,5 % à environ 3 %, plus préférablement d'environ 1 % à environ 2 %, ainsi qu'à un gaz de soudage contenant de l'azote, l'azote du gaz de soudage étant présent dans une quantité d'environ 1 % à environ 15 %, de préférence d'environ 3 % à environ 10 % et notamment d'environ 5 % à environ 8 %, l'additif de soudage, au demeurant de nature comparable, ne recevant l'ajout, en dehors du Ti et/ou de l'Al et en quantité significative, d'aucun autre élément que ceux qui sont déjà présents dans l'acier austénitique.

2. Procédé de soudage TIG ou MIG/MAG selon la revendication 1, **caractérisé en ce que** le restant du gaz de soudage comprend l'argon, l'hélium, le CO₂, l'O₂ et/ou l'H₂.
